# EUROPEAN PATENT APPLICATION

(11) **EP 0 535 894 A2**
(43) Date of publication of application: **07.04.1993**
(21) Application number: 92308823.1
(22) Date of filing: 28.09.1992
(51) Int. Cl.: G06F 15/72

(54) **Apparatus and method for transforming a graphic pattern**

(30) Priority: 01.10.1991 JP 278895/91
(71) Applicant: INTERNATIONAL BUSINESS MACHINES CORPORATION, Armonk, N.Y. 10504 (US)
(72) Inventor: Nakayama, Yasutomo, Asaka-shi, Saitama-ken (JP)
(74) Representative: Burt, Roger James, Dr.

(57) **Abstract**

The present invention relates to apparatus for transforming a graphic pattern (35) comprising means (32A) for specifying the portion of the graphic pattern to be transformed, tool generating means for generating a tool to be used in transforming the graphic pattern, and transforming means for using the tool to transform the graphic pattern.

According to the invention the apparatus is characterised in that the tool generating means comprises means (33) for generating a reference pattern as the tool, and in that the transforming means comprises means (32B, 32C) for specifying the portion of the reference pattern to be used in transforming the graphic pattern, and means for replacing the specified portion of the graphic pattern with the specified portion of the reference pattern.

## Description

The present invention relates to an apparatus and a method for transforming a graphic pattern, which is a line drawing consisting of curves or polygonal lines.

To transform a graphic pattern shown on the display of a computer using graphics software, e.g., to generate a new pattern by combining some generated polygonal lines and parts of a circle, a part of the pattern is deleted and replaced with other lines. For some graphics software suited to the above operation, a specified option "intersection" is added to the function of "deletion". This function makes it possible to delete only unnecessary portions between intersections of the graphic pattern with the new lines. However, if the unnefessary portion is a curved polygonal line, there is a disadvantage in that deletion must be executed many times, for every curved line segment. Moreover, the deleted portions must be separately corrected and drawn again.

Japanese Published Unexamined Patent Application (PUPA) No. 3-91868 discloses a method in which the portion of a graphic pattern to be corrected is specified by using a rectangle in order to delete line segments of the graphic pattern which lie in the rectangle, and the two line segments of the graphic pattern which lie contacting the rectangle from the outside at two points are selected and automatically extended into the rectangle to connect the two points by a straight line. However, this method can be used only for line segments in the original graphic pattern and only straight lines can be drawn.

Japanese PUPA No. 1-112380 discloses a method in which the start and end points of a line segment to be deleted are indicated in order to accurately connect the two points with a straight line. In this case also, only a straight line can be drawn between the two points.

Japanese PUPA No. 64-1062 discloses a method in which unnecessary portions of a graphic pattern can be deleted using an erasing shield. However, the deleted portions must be separately corrected and drawn again.

To summarise in conventional graphic pattern transforming apparatus, a graphic pattern can only be transformed under a limited range and limited conditions, or complicated operations are required to transform the graphic pattern.

The object of the present invention is to provide an improved apparatus and method for transforming a graphic pattern.

The present invention relates to apparatus for transforming a graphic pattern comprising means for specifying the portion of the graphic pattern to be transformed, tool generating means for generating a tool to be used in transforming the graphic pattern, and transforming means for using the tool to transform the graphic pattern.

According to the invention the apparatus is characterised in thatthe tool generating means comprises means for generating a reference pattern as the tool, and in that the transforming means comprises means for specifying the portion of the reference pattern to be used in transforming the graphic pattern, and means for replacing the specified portion of the graphic pattern with the specified portion of the reference pattern.

The present invention also relates to a method of transforming a graphic pattern comprising specifying the portion of the graphic pattern to be transformed, generating a tool to be used in transforming the graphic pattern, and using the tool to transform the graphic pattern.

According to the invention the method is characterised in that the tool generating operation comprises generating a reference pattern as the tool, and in that the transforming operation comprises specifying the portion of the reference pattern to be used in transforming the graphic pattern, and replacing the specified portion of the graphic pattern with the specified portion of said reference pattern.

According to one embodiment of the present invention a graphic pattern is transformed by replacing parts of it with a part or the whole of a reference pattern according to certain rules. The graphic pattern to be transformed consists of curves and polygonal lines and the reference pattern consists of closed curves. The reference pattern functions as a ruler and by specifying a range of the graphic pattern to be transformed, by specifying starting and ending points, and the direction of a route. The reference pattern consists of any line drawing such as a circle or polygon, which can be translated, rotated, enlarged, and contracted. Therefore, the reference pattern can be freely moved relative to the graphic pattern in a manner similar to moving a ruler on a drawing paper.

The following rules are applied to the starting and ending points and the route.

(1) The starting point must be an intersection between the graphic pattern and the reference pattern.
(2) The ending point must be a point on the reference pattern.
(3) The specified portion from the starting point of the reference pattern to the ending point of it through the route in the specified direction must replace the specified portion from the starting point of the object graphic to its ending point or its extreme point.

In order that the invention may be more readily understood an embodiment will now be described with reference to the accompanying drawings in which:
Figure 1 shows the functional configuration of a graphic pattern transforming apparatus using a reference pattern which is an embodiment of the present invention,
Figure 2 shows an example of a system configuration for implementing the graphic pattern transforming apparatus in Figure 1 with a general-purpose computer,
Figure 3 shows an example of the display screen of the display unit in Figure 2,
Figure 4 shows an example of the data structure of a pattern stored in the storage section in Figure 2,
Figure 5 is a flow chart showing the outline of the graphic pattern transforming method according to one embodiment of the present invention,
Figure 6 shows a detailed flow chart of the operation for acquisition of the reference pattern in Figure 5,
Figure 7 shows a flow chart for transforming and moving the pattern in Figure 5,
Figure 8 shows the stages of computation by the CPU for the movement defined in Figure 7,
Figure 9 shows the stages of computation by the CPU for the rotation defined in Figure 7,
Figure 10 shows the stages of computation by the CPU for the case of size change defined in Figure 7,
Figure 11 shows the flow chart for the transformation defined in Figure 5,
Figure 12 is an explanatory drawing for various specification operations necessary for the transformation,
Figure 13 shows details of determination of a specified portion on the graphic pattern,
Figure 14 shows the data structure in the storage for the transformation defined in Figure 5,
Figure 15 shows the stages of graphic pattern processing when the end point is notthe intersection between the graphic pattern and the reference pattern,
Figure 16 shows an example of the procedure for drawing a picture of a bird on a display screen using the apparatus and method described, and
Figure 17 shows an example of drawing a picture of a flying horse on a display screen using the apparatus and method described.

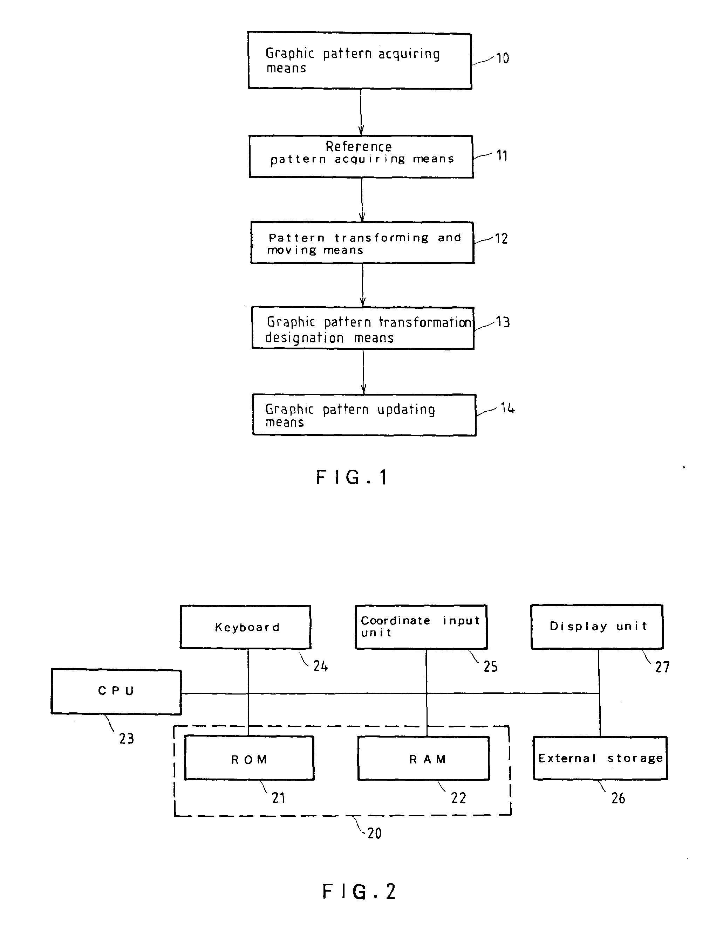

Figure 1 shows the functional configuration of a graphic pattern transforming apparatus which is an embodiment of the present invention. In the figure, 10 is a graphic pattern acquiring means for inputting and acquiring the data for the graphic pattern to be transformed. 11 is a reference pattern acquiring means for generating or acquiring a "reference pattern" for use in transforming the graphic pattern. 12 is a reference pattern transforming and moving means for transforming and moving the reference pattern. 13 is a graphic pattern transformation indicating means for indicating the relationship between a reference pattern and graphic pattern when transforming the graphic pattern by replacing a part of the graphic pattern with part or all of the reference pattern. 14 is an graphic pattern transforming means for transforming a graphic pattern by a certain theory determined by the graphic pattern transformation indicating means. The apparatus also includes an outputting means (not shown) for outputting the result of pattern transformation operation.

Figure 2 shows a system configuration for implementing the graphic pattern transforming apparatus in Figure 1 using a general purpose computer. In Figure 2, 20 is a storage section including ROM 21, RAM 22, and a buffer, holding the computer graphics procedures and commands and data necessary for graphic pattern processing. The procedures for executing functions of the graphic pattern acquiring means, the reference pattern acquiring means, the reference pattern transforming and moving means, the graphic pattern transformation indicating means, and the graphic pattern transforming means are stored in the form of programs togetherwith related data. The outlines of these programs are described later. 23 is a CPU, which constitutes a part of the above system and which processes graphics (generation, acquisition, and transformation) for the graphic pattern and the reference pattern according to the above procedure. Graphic information including the coordinate values of the graphic pattern and the reference pattern inputted through an input unit such as the keyboard 24 or the coordinate input unit25, the operation process of graphic pattern processing (generation, acquisition, and transformation), and the final results are stored in the storage section 20. The coordinate input unit 25 may be a mouse pen tablet, or track ball. 26 is an external storage for supporting the ROM and RAM. 27 is a display unit for allowing the user to interactively input the information, commands, and menus necessary for graphic pattern processing, and for outputting and displaying the results of graphic pattern processing operation.

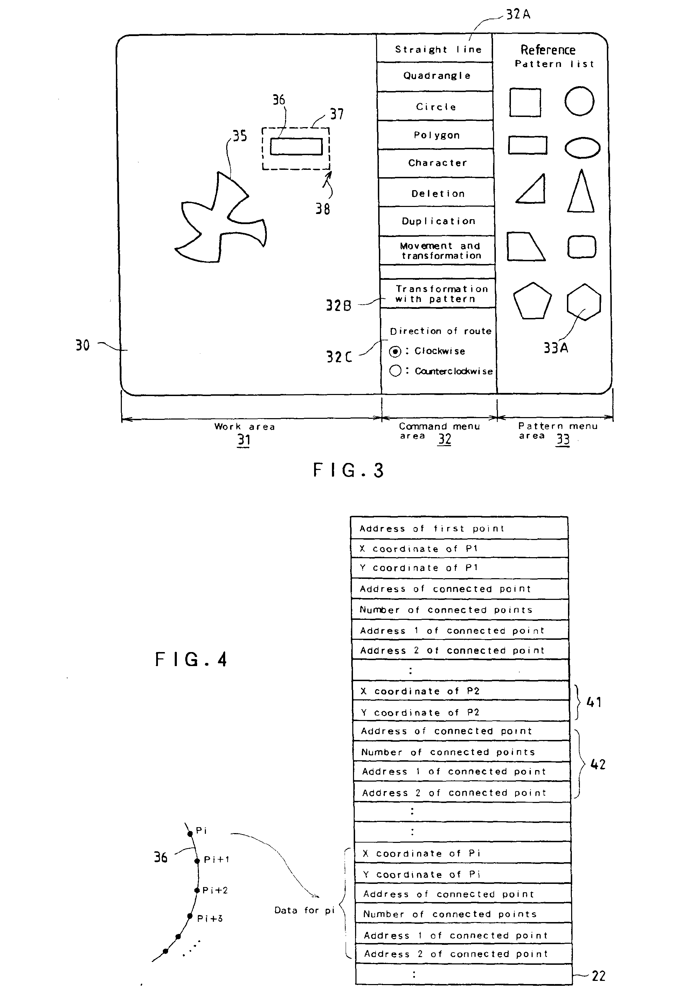

Figure 3 shows an example of the display screen 30 of the display unit 27. The display screen 30 has a work area 31, a command menu area 32, and a reference pattern menu area 33. A graphic pattern 35, a reference pattern 36, a pattern moving and transforming frame 37, and a cursor 38 are displayed in the work area 31. In command menu area 32, a command menu 32A, for the graphic pattern processing generally provided in conventional graphic programs for straight lines and rectangles, and the commands for pattern transformation operation being described, command menu 32B for specifying "transformation with (reference) pattern", and command menu 32C for specifying the direction of the route are all displayed. The pattern menu area 33 includes a library area showing reference pattern library 33A stored in the storage section 20.

The graphic pattern 35 and the reference pattern 36, as shown in Figure 4, consist of an aggregate of points (P1, P2, ...., Pi,...). The "X and Y coordinates" 41 of each point Pi and the "data indicating the points connected to each point Pi" 42 are stored in the RAM 22 of the storage section 20. Figure 4 shows the data structure of the reference pattern 36. For the pattern moving and transforming frame 37, the data for the X and Y coordinates, width, height, inclination, and central point position of the frame is stored in the RAM 22.

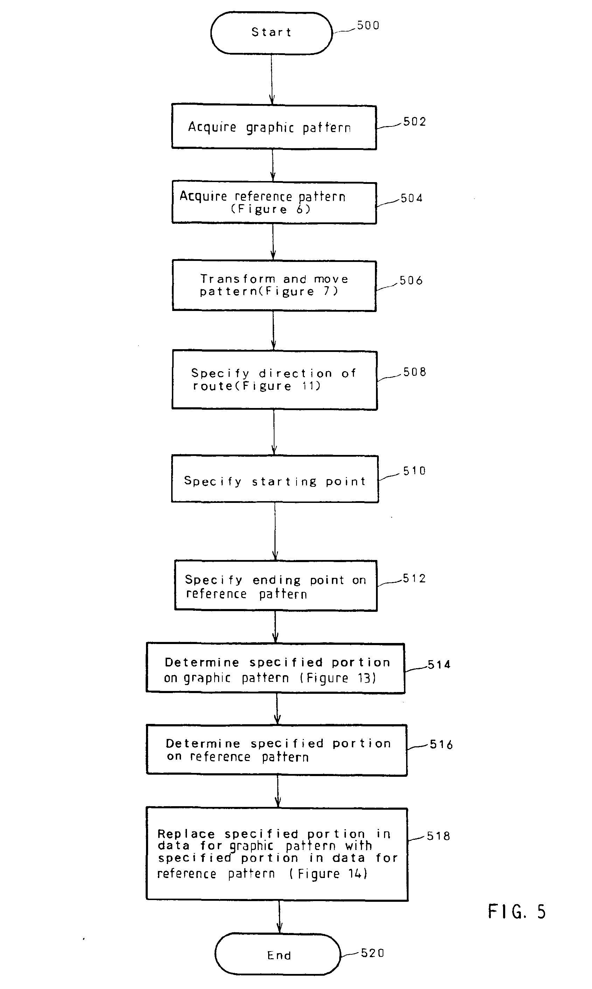

Figure 5 is a flowchart showing the outline of a graphic pattern transformation according to the operation being described. First, the graphic pattern 35 is acquired by the graphic pattern acquiring means 10 (step 502). Then, the reference pattern 36 is acquired by the reference pattern acquiring means 11 (step 504). The reference pattern 36 is a line drawing having a single closed route, which consists of, for example, a closed curve such as a polygon or circle. The reference pattern 36 is transformed according to necessity before it is moved so that at least a part of the reference pattern 36 is overlapped with the graphic pattern 35 (step 506). Then, the direction of the route (clockwise or counterclockwise) is specified (step 508) and an intersection between the reference pattern 36 and the graphic pattern 35 is specified as a starting point (step 510). A point on the reference pattern is arbitrarily specified as an ending point (step 512). It is also possible to specify the direction of the route in a step before this. According to these specifications and the previously given transformation rules, the specified portions on the graphic pattern and the reference pattern are determined. In other words, the data for the specified portions is discriminated by the graphic pattern transforming means 13 (steps 514 and 516). Finally, the data forthe specified portion of the graphic pattern data is replaced by the data for the specified portion of the reference pattern (step 518).

The following are the rules for graphic pattern transformation.

(1) The first point or the starting point (PS) must be an intersection between the graphic pattern and the reference pattern.
(2) When the second point or the ending point (PT) is another intersection between the graphic pattern and the reference pattern, the portion between the starting point TS and the ending point TT on the graphic pattern is replaced with the portion between the starting point CS and the ending point CT on the reference pattern. In this case, the portion between the starting point CS and the ending point CT on the pattern is defined as the route extending in the specified direction from CS.
(3) When the ending point PT is not an intersection between the graphic pattern and the reference pattern, the portion between the starting point TS and the extreme point TL on the graphic pattern is replaced with the portion between the starting point CS and the ending point CT on the reference pattern. In this case, the extreme point TL is defined as the extreme point at the inside of the reference pattern by using the starting point TS as a boundary.

Acquisition of the graphic pattern 35 by the graphic pattern acquiring means 10 is a process for storing data in the RAM 22 for points constituting the graphic pattern, that is, the x and y coordinate values and the data for connective relationships between points.

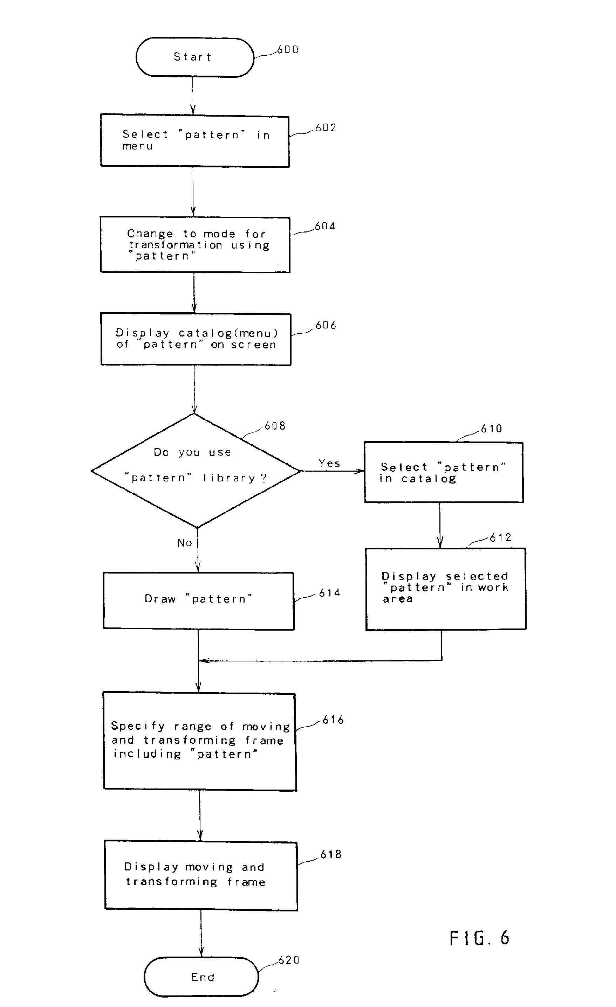

Figure 6 shows a detailed flow of the acquisition of the reference pattern 36 (step 504 in Figure 5), which starts when the operator selects the command 32B for specifying "transformation with pattern" in the command menu on the screen (step 602). This operation changes the graphic pattern processing mode, and the reference pattern library 33A is displayed on the screen as shown in Figure 3 (step 606). The operator decides whether or not to use the reference pattern library (step 608). when he uses the reference pattern library, he moves the cursor 38 to the area 33A on the screen, clicks the mouse (by pressing the button on the mouse and immediately releasing it) to select a pattern in the reference pattern library 33A and to move it to the work area 31 (steps 610 and 612). When he does not use the reference pattern library, he directly generates a reference pattern consisting of a line drawing in the work area 31 (step 614). Then, he specifies a rectangular area that includes the closed curve by dragging with the mouse (by moving the mouse from one point to another on the screen while pressing its button and releasing it) to generate the moving and transforming frame 37 (steps 616 and 618). The closed curve and the moving and transforming frame can be generated by using a conventional graphic program. The data for the reference pattern and the frame is stored in the storage section. It is also possible to add a newly-generated reference pattern to the reference pattern library.

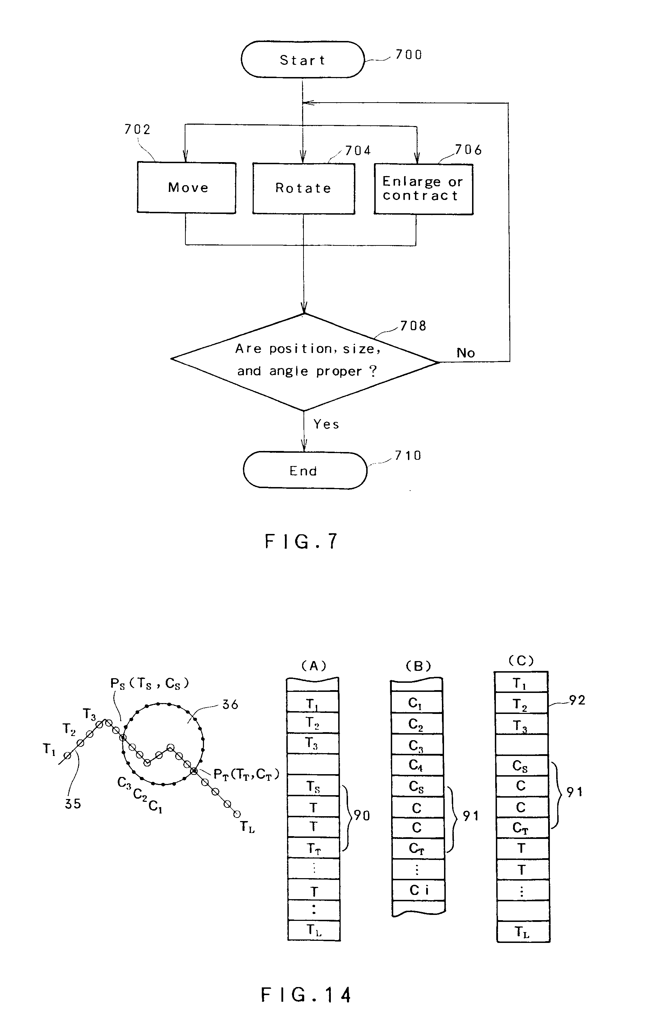

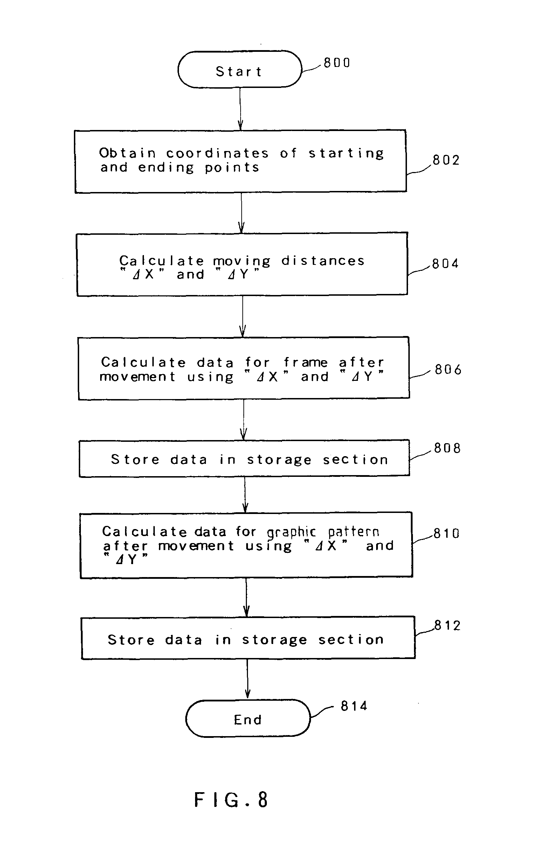

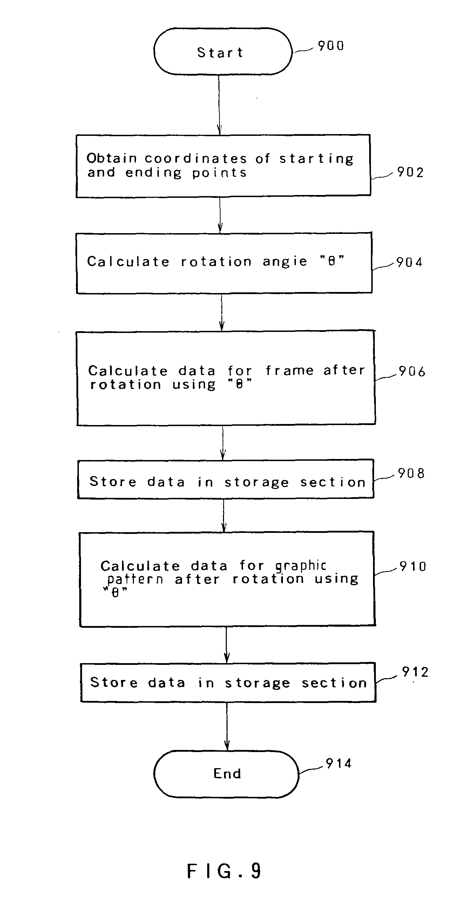

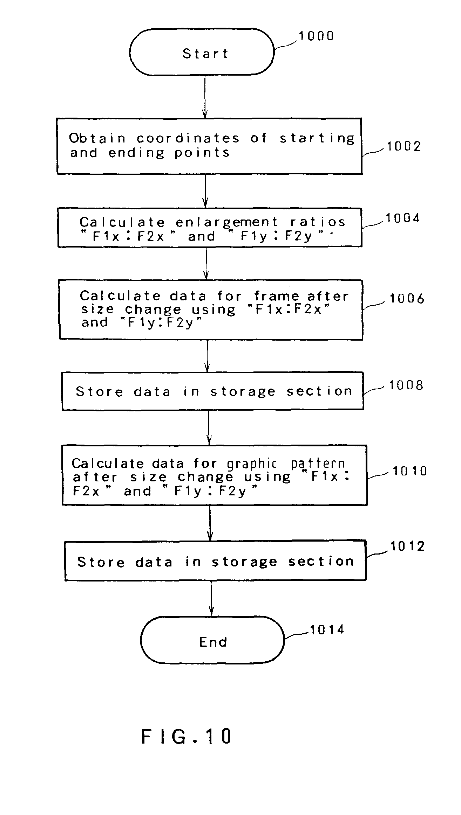

Figure 7 shows the flow of transformation and movement of the reference pattern 36 (step 506 in Figure 5), in which the reference pattern is moved, enlarged, contracted, or rotated so that it is brought into a position, size, and angle suitable for transformation. That is, the x and y coordinate values of points in the reference pattern are calculated by the CPU according to commands movement, enlargement, contraction, or rotation selected by the operator and according to the distance of mouse movement, and the data in the storage section is updated. For movement, as shown in Figure 8, the coordinates of the starting and ending points for dragging by the mouse are first obtained. Then, the moving distances "AX" and "AY" are obtained from the difference between these coordinate values (step 804), and the data for the frame and that for the graphic pattern after movement is calculated and stored in the storage section (steps 806 through 812). For rotation, as shown in Figure 9, the rotation angle "0" of the frame is obtained from the difference between the coordinate values of the starting and ending points for dragging (step 904), and the data for the frame and for the graphic pattern after rotation is calculated and stored in the storage section (steps 906 through 912). For enlargement or contraction, as shown in Figure 10, the change ratio of the frame size is obtained (step 1004), and the data for the frame and thatforthe graphic pattern after changing the size is calculated and stored in the storage section (steps 1006 through 1012).

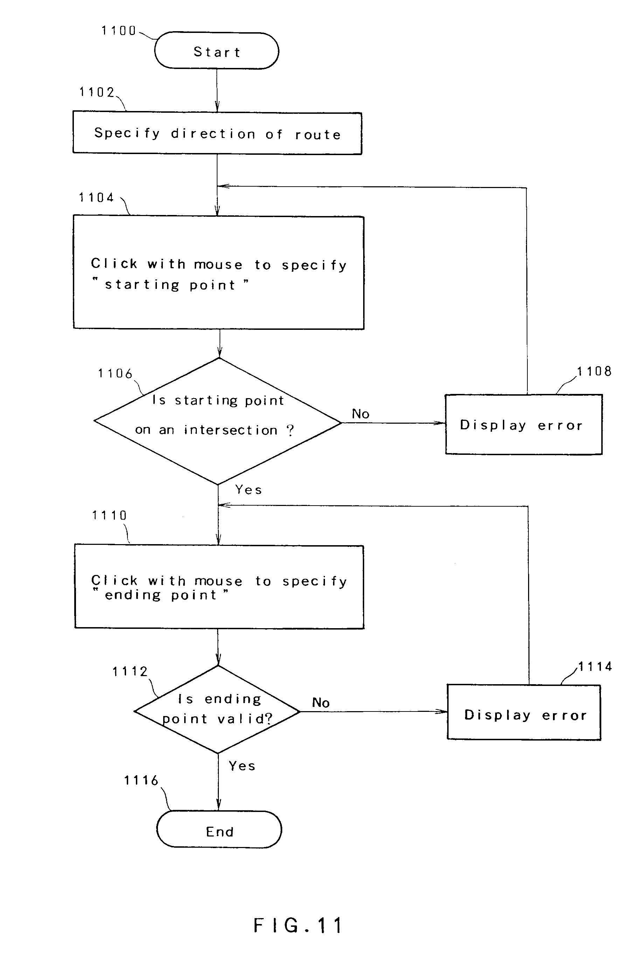

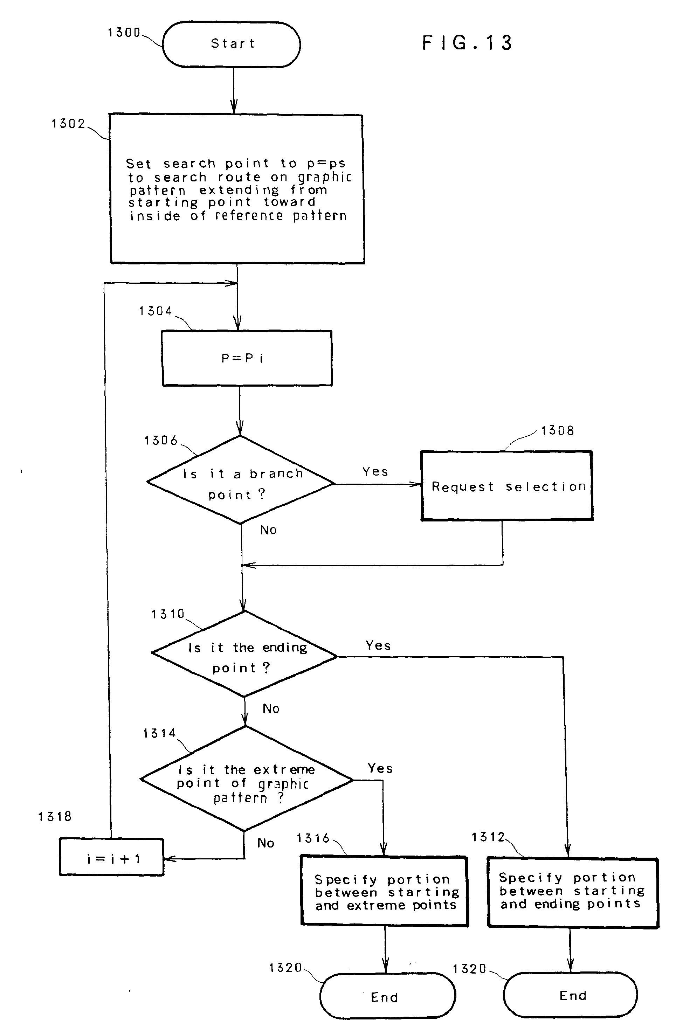

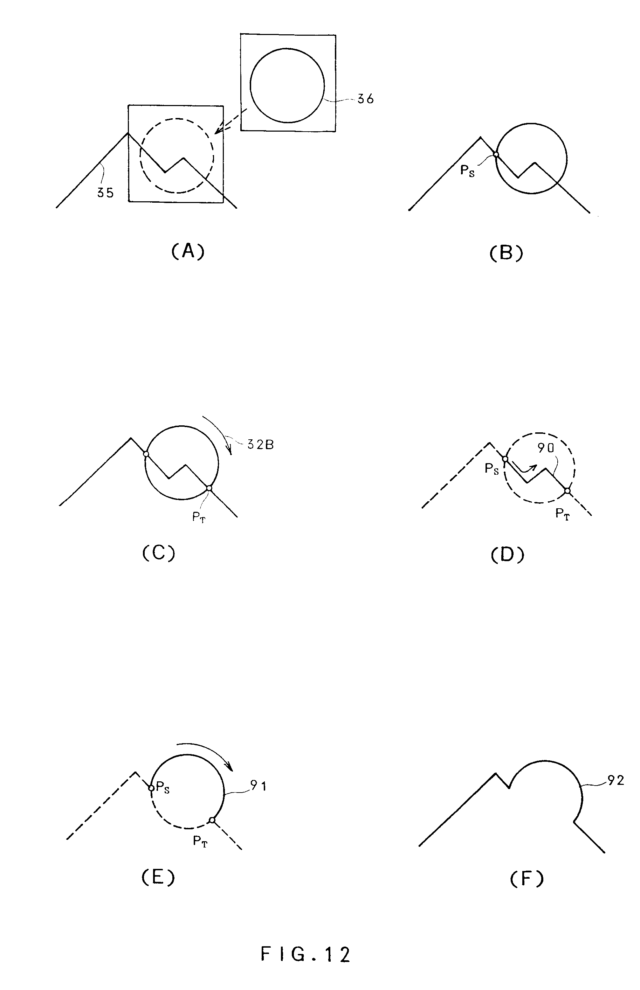

Figures 11 and 12 show various specification operations necessary for transformation. The operator first specifies the direction of the route using the route specifying menu 32C in the display screen 30 (step 1102). Then, the operator clicks an intersection between the reference pattern 36 and the graphic pattern 35 with the mouse to specify it as the starting point PS (step 1104). If a point other than an intersection is clicked, an error is displayed on the screen to prompt the operator to input correct data (steps 1106 through 1108). In addition, he clicks another point on the reference pattern to specify it as the ending point PT (step 1110). If a point that is invalid as the ending point PT is clicked, an error is displayed to prompt the operator to input correct data (steps 1112 through 1114). For example, an error appears when the same point as the starting point PS is clicked as the ending point PT or when a point not present on the reference pattern is clicked.

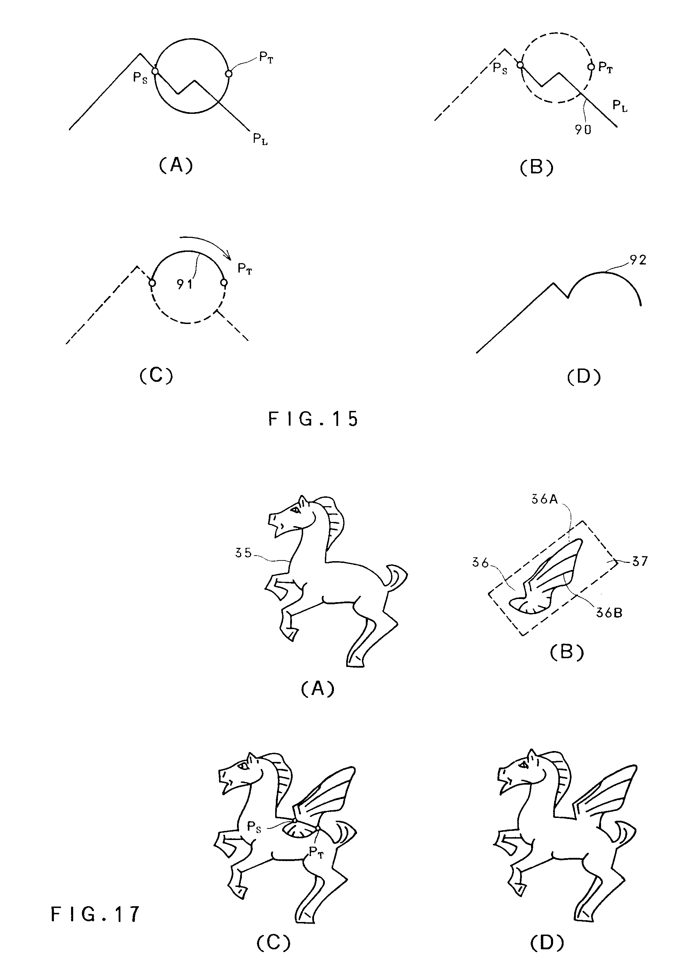

Figure 13 shows the procedure for determination of the specified portion on the graphic pattern or for discrimination of the data for the specified portion in step 514. The starting point (PS in Figure 12 (B)) on the graphic pattern is set to be the search point, and a search of each point Pi of the route extending to the inside of the reference pattern from the starting point is started (step 1302). When the search point is a branch point on the graphic pattern, a request for selection is displayed (because the state in which the search point is a branch point cannot be processed) in order to prompt the operator to indicate which branch route is to be taken (steps 1306 through 1308). In other words, when the ending point PT is found earlier than the extreme point, the portion between the starting point PS and the ending point PT is uniquely determined as the specified portion 90 (D, Figure 12) (steps 1310 through 1312). When the ending point PT is absent on the route on the graphic pattern, but the extreme point PL is present on it, in other words, when the extreme point is first encountered on the route instead of the ending point, the portion between the starting point PS and the extreme point PL is uniquely determined as the specified portion 90 of the graphic pattern (steps 1314 through 1316). Each point on the route is searched similarly (step 1318).

For the procedure for determination of the specified portion on the reference pattern or for discrimination of the data for the specified portion on it in step 516 of the Figure 5, as shown in Figure 12 (E), the section 91 connecting the starting point PS and the ending point PT on the reference pattern in the specified route direction is uniquely determined as the specified portion on the reference pattern. If branch point is present on the route through the reference pattern, a branch route in one direction (e.g. right side) is searched. Unless the ending point PT is present on the branch route, the other branch route will be searched again, starting with the branch point.

Figure 14 shows the status of the data structure stored in the RAM 22 in steps 518 through 520 in Figure 5. That is, for the example in Figure 12, the data for the specified portion of the graphic pattern is replaced with the data for the specified portion of the reference pattern. In other words, the data of TS through TTforthe specified portion 90 on the graphic pattern 35 shown in (A) is replaced with the data of CS through CTforthe specified portion 91 of the reference pattern 36 in (B) and the data for the transformed graphic pattern 92 in (C) is obtained. T and C are data values corresponding respectively to 41 and 42 at each point Pi of the graphic pattern 35 and reference pattern 36 in Figure 4.

Figure 15 shows the graphic processing when the end point PT is not an intersection between the graphic pattern and the reference pattern, in which the specified portion 91 of the reference pattern is replaced with the specified portion 90 between the starting point PS and the extreme point PL and the transformed graphic pattern 92 (D) is formed.

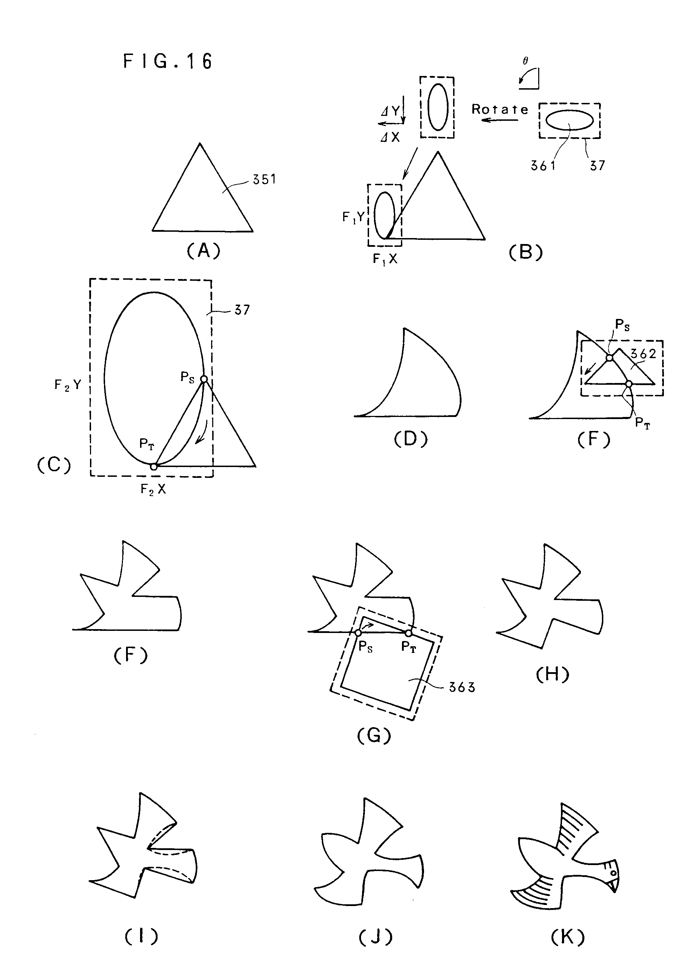

Figure 16 shows an example of drawing a bird picture using the pattern transformation apparatus described. First, a triangle 351 is drawn as the graphic pattern (A), an ellipse 361 in the library is adopted as the reference pattern, and the moving and transforming frame 37 is generated. Then, the frame 37 is rotated and moved to put it on a position close to the apex of the triangle 351(B). Then, the ellipse 361 is enlarged together with the frame 37. Moreover, to transform one side of the triangle, the starting point PS, the ending point PT, and the direction of the route are specified (C). Similarly, the other side is also transformed (D). In addition, a triangle 362 in the library is adopted and used for transforming by specifying the starting point PS, the ending point PT, and the direction of the route (E). Similarly, the other side is also transformed (F). In addition, a square 363 is adopted as a reference pattern and used for transforming by specifying the starting point PS, the ending point PT, and the direction of the route (G). Similarly, the other side is transformed (H). In the same way, the modified triangle 351 is further transformed by using reference patterns such as a circle or an ellipse (I and J). Finally, detailed portions are finished up by using a normal plotting program according to necessity (K).

The patterns to be adopted as reference patterns should be composed of a single closed route. Therefore, reference patterns consisting of simple line drawings are preferable. However, it is possible to use a reference pattern with a branch route branched into a single closed route unless the branch route intersects with the graphic pattern to be transformed. For example, as shown in Figure 17, it is permitted for the reference pattern 36 to consist of a closed contour 36Aand a plurality of branches 36B. Figure 17 shows an example of adding a wing to a horse that is the graphic pattern to be transformed. The picture of the flying horse shown in (D) can be obtained from the horse pattern at (A) by using the wing 36 as the reference pattern, moving it to the back of the horse 35 so that it overlaps the back of the horse (C), making intersections the starting point PS and the ending point PT, and specifying the route with an arrow to transform it.

## Claims

1. Apparatus for transforming a graphic pattern (35) comprising
means (13) for specifying the portion of said graphic pattern to be transformed,
tool generating means (11) for generating a tool to be used in transforming said graphic pattern, and
transforming means (14) for using said tool to transform said graphic pattern, characterised in that
said tool generating means comprises means for generating a reference pattern (33A) as said tool, and in that
said transforming means comprises
means (12) for specifying the portion of said reference pattern to be used in transforming said graphic pattern, and
means (12) for replacing said specified portion of said graphic pattern with said specified portion of said reference pattern.

2. Apparatus as claimed in Claim 1 in which said reference pattern is a closed polygon or curved sided pattern, characterised in that
said means for specifying the portion of said reference pattern to be used for transformation comprises means for specifying two points in the portion of the reference pattern to be used and the actual pattern between said two points to be used.

3. Apparatus as claimed in Claim 2 characterised in that
said means for specifying the portion of said graphic pattern to be transformed comprises means for specifying two points at the ends of said specified portion,
and in that
said transforming means arranges for the two points in said graphic pattern to coincide with the two points on said reference pattern.

4. Apparatus as claimed in any one of the preceding claims characterised in that said tool generating means selects said reference pattern from a library (33) of reference patterns.

5. A method of transforming a graphic pattern comprising
specifying the portion of said graphic pattern to be transformed,
generating a tool to be used in transforming said graphic pattern, and
using said tool to transform said graphic pattern,
characterised in that
said tool generating operation comprises generating a reference pattern as said tool,
and in that
said transforming operation comprises
specifying the portion of said reference pattern to be used in transforming said graphic pattern, and
replacing said specified portion of said graphic pattern with said specified portion of said reference pattern.

6. A method as claimed in Claim 5 in which said reference pattern is a closed polygon or curved sided pattern,
characterised in that
said operation of specifying the portion of said reference pattern to be used for transformation comprises specifying two points in the portion of the reference pattern to be used and the actual pattern between said two points to be used.

7. A method as claimed in Claim 6 characterised in that
said operation of specifying the portion of said graphics pattern to be transformed comprises specifying two points at the ends of said specified portion,
and in that
said transforming operation arranges for the two points in said graphic pattern to coincide with the two points on said reference pattern.

8. A method as claimed in any one of the preceding claims 5, 6 or 7 characterised in that said tool generating operation selects said reference pattern from a library of reference patterns.
